# EUROPEAN PATENT APPLICATION

(11) **EP 2 800 405 A1**
(43) Date of publication of application: **05.11.2014**
(21) Application number: 13738084.6
(22) Date of filing: 15.01.2013
(51) Int. Cl.: H04W 4/14

(54) **METHOD AND DEVICE FOR SECURELY PROCESSING SHORT MESSAGES**

(30) Priority: 19.01.2012 CN 201210018183
(71) Applicant: Huawei Technologies Co., Ltd, Shenzhen, Guangdong 518129 (CN)
(72) Inventor: ZHANG, Lijia, Shenzhen Guangdong 518129 (CN); CHEN, Jing, Shenzhen Guangdong 518129 (CN); XIONG, Chunshan, Shenzhen Guangdong 518129 (CN)
(74) Representative: Pfenning, Meinig & Partner GbR
(86) International application number: PCT/CN2013/070447
(87) International publication number: WO 2013/107330

(57) **Abstract**

The present invention discloses a method and apparatus for secure processing of a short message, and relates to the field of wireless communications technologies. The method includes: receiving, by a second device, identifier information sent by a first device; sending a rejection indication or a query result to the first device if the second device determines, according to the identifier information, that a receiver is a machine type communication MTC device or determines that the identifier information is not in an authorization list; or sending an acknowledgement indication or a query result to the first device if the second device determines, according to the identifier information, that a receiver is another device other than an MTC device or determines that the identifier information is in an authorization list. Embodiments of the present invention are mainly applied to a secure processing procedure of a short message.

## Description

This application claims priority to Chinese Patent Application No. 201210018183.0, field with the Chinese Patent Office on January 19, 2012 and entitled " METHOD AND APPARATUS FOR SECURE PROCESSING OF SHORT MESSAGE", which is incorporated herein by reference in its entirety.

### TECHNICAL FIELD

The present invention relates to the field of wireless communications technologies, and in particular, to a method and apparatus for secure processing of a short message.

### BACKGROUND

The machine-to-machine (Machine to Machine, M2M for short) technology is an integration of wireless communications and information technologies, and means that direct communication can be performed between machines without human intervention. There are a wide variety of M2M applications, including the following five major applications: automatic instruments (water-power-gas meters), remote monitoring, industrial safety and home automation, payment systems (automatic teller machines, supporting terminals, parking meters, and the like), and vehicle remote control (such as fleet management, toll charging, vehicle recovery, and insurance premium payment according to a driving condition). Vehicle-mounted applications include handsfree, remote communications systems, built-in navigation, emergency calling, remote diagnosis, built-in alarming, and the like. Machine-to-machine (M2M) communication is also called machine type communication (Machine Type Communication, MTC for short). M2M communication has many machine type communication characteristics due to features such as a huge number of devices, low mobility, and small communication traffic. 3GPP (The 3rd Generation Partnership Project, The 3rd Generation Partnership Project) has now commenced an effort to optimize a network system in terms of the characteristics, and an M2M device is called an MTC device.

An MTC device may be triggered by using an SMS (Short Message Service, short message service), to execute a related operation instructed by the SMS. For example, when the SMS is a short message for triggering an access network, when an attacker obtains an MSISDN (Mobile Station Integrated Services Digital Network Number, mobile station international integrated services digital network number) or an IMSI (International Mobile Subscriber Identity, international mobile subscriber identity) of the MTC device, the attacker can easily initiate a fake trigger attack by using a terminal, which wastes power or network resources of the MTC device, and compromises security of the MTC device.

### SUMMARY

Embodiments of the present invention provide a method and apparatus for secure processing of a short message, thereby improving security of an MTC device, and saving power or network resources of the MTC device.

To achieve the foregoing objectives, the embodiments of the present invention use the following technical solutions:
A method for secure processing of a short message includes:
   receiving, by a second device, identifier information sent by a first device;
   sending a rejection indication or a query result to the first device if the second device determines, according to the identifier information, that a receiver is a machine type communication MTC device or determines that the identifier information is not in an authorization list; or
   sending an acknowledgement indication or a query result to the first device if the second device determines, according to the identifier information, that a receiver is another device other than an MTC device or determines that the identifier information is in an authorization list.
A method for secure processing of a short message includes:
   receiving, by a terminal, a short message that carries identifier information;
   ignoring the short message if the terminal determines, according to the identifier information, that the identifier information is not in an authorization list; or
   establishing, by the terminal, a connection with a network side if the terminal determines, according to the identifier information, that the identifier information is in an authorization list.
A method for secure processing of a short message includes:
   receiving, by a first device, a short message that carries identifier information;
   performing a reject processing operation if the first device determines, according to the identifier information, that a receiver is a machine type communication MTC device and/or determines that the identifier information is not in an authorization list; or
   continuing with a short message procedure if the first device determines, according to the identifier information, that a receiver is another device other than an MTC device or determines that the identifier information is in an authorization list.
A method for secure processing of a short message includes:
   receiving, by a terminal, a short message that carries a message authentication code and a fresh;
   calculating, by the terminal, a local authentication code according to a Ktrigger preconfigured by the terminal, the message authentication code, and the fresh;
   ignoring the short message if the message authentication code is inconsistent with the local authentication code; or
   establishing, by the terminal, a connection with a network side if the message authentication code is consistent with the local authentication code.
An apparatus for secure processing of a short message includes:
   a receiving unit, configured to receive identifier information sent by a first device; and
   a processing unit, configured to send a rejection indication or a query result to the first device if it is determined, according to the identifier information received by the receiving unit, that a receiver is a machine type communication MTC device or it is determined that the identifier information is not in an authorization list; or configured to send an acknowledgment indication or a query result to the first device if it is determined, according to the identifier information received by the receiving unit, that a receiver is another device other than an MTC device or it is determined that the identifier information is in an authorization list.
An apparatus for secure processing of a short message includes:
   a receiving unit, configured to receive a short message that carries identifier information; and
   a processing unit, configured to ignore the short message if it is determined, according to the identifier information received by the receiving unit, that the identifier information is not in an authorization list; or configured to establish a connection between the apparatus and a network side if it is determined, according to the identifier information received by the receiving unit, that the identifier information is in an authorization list.
An apparatus for secure processing of a short message includes:
   a receiving unit, configured to receive a short message that carries identifier information; and
   a processing unit, configured to perform a reject processing operation if it is determined, according to the identifier information received by the receiving unit, that a receiver is a machine type communication MTC device and/or it is determined that the identifier information is not in an authorization list; or configured to continue with a short message procedure if it is determined, according to the identifier information received by the receiving unit, that a receiver is another device other than an MTC device or it is determined that the identifier information is in an authorization list.
An apparatus for secure processing of a short message includes:
   a receiving unit, configured to receive a short message that carries a message authentication code and a fresh;
   an analyzing unit, configured to calculate a local authentication code according to a Ktrigger preset by the analyzing unit, the message authentication code received by the receiving unit, and the fresh received by the receiving unit; and
   a processing unit, configured to ignore the short message if the message authentication code received by the receiving unit is inconsistent with the local authentication code calculated by the analyzing unit; or configured to establish a connection between the apparatus and a network side if the message authentication code received by the receiving unit is consistent with the local authentication code calculated by the analyzing unit.

According to the methods and apparatuses for secure processing of a short message provided in the embodiments of the present invention, a terminal, a first device, or a second device receives identifier information in a short message; and determines, according to the identifier information, that a reject processing operation is to be performed on the short message, or that a rejection indication, a query result, or an acknowledgement indication is to be sent, or that the short message is to be ignored. In this way, a network side node or the terminal checks the identifier information in the short message, or the terminal checks a message authentication code in the short message, thereby avoiding a problem in the prior art that an attacker initiates a fake trigger attack against an MTC device by using a terminal, improving security of the MTC device, and saving power or network resources of the MTC device.

### BRIEF DESCRIPTION OF DRAWINGS

FIG. 1 is a flowchart of a method for secure processing of a short message according to an embodiment of the present invention;
FIG. 2 is a structural diagram of an apparatus for secure processing of a short message according to an embodiment of the present invention;
FIG. 3 is a flowchart of another method for secure processing of a short message according to an embodiment of the present invention;
FIG. 4 is a structural diagram of another apparatus for secure processing of a short message according to an embodiment of the present invention;
FIG. 5 is a flowchart of still another method for secure processing of a short message according to an embodiment of the present invention;
FIG. 6 is a flowchart of yet another method for secure processing of a short message according to an embodiment of the present invention;
FIG. 7 is a flowchart of yet another method for secure processing of a short message according to an embodiment of the present invention;
FIG. 8 is a flowchart of yet another method for secure processing of a short message according to an embodiment of the present invention;
FIG. 9 is a flowchart of yet another method for secure processing of a short message according to an embodiment of the present invention;
FIG. 10 is a structural diagram of still another apparatus for secure processing of a short message according to an embodiment of the present invention;
FIG. 11 is a flowchart of yet another method for secure processing of a short message according to an embodiment of the present invention;
FIG. 12 is a structural diagram of yet another apparatus for secure processing of a short message according to an embodiment of the present invention;
FIG. 13 is a flowchart of yet another method for secure processing of a short message according to an embodiment of the present invention;
FIG. 14 is a structural diagram of yet another apparatus for secure processing of a short message according to an embodiment of the present invention;
FIG. 15 is a flowchart of yet another method for secure processing of a short message according to an embodiment of the present invention;
FIG. 16 is a structural diagram of yet another apparatus for secure processing of a short message according to an embodiment of the present invention;
FIG. 17 is a flowchart of yet another method for secure processing of a short message according to an embodiment of the present invention;
FIG. 18 is a structural diagram of yet another apparatus for secure processing of a short message according to an embodiment of the present invention;
FIG. 19 is a structural diagram of yet another apparatus for secure processing of a short message according to an embodiment of the present invention;
FIG. 20 is a flowchart of still another method for secure processing of a short message according to an embodiment of the present invention;
FIG. 21 is a structural diagram of yet another apparatus for secure processing of a short message according to an embodiment of the present invention;
FIG. 22 is a flowchart of still another method for secure processing of a short message according to an embodiment of the present invention;
FIG. 23 is a structural diagram of yet another apparatus for secure processing of a short message according to an embodiment of the present invention;
FIG. 24 is flowchart of a method for addressing small data between mobile management entities according to an embodiment of the present invention; and
FIG. 25 is flowchart of a method for addressing small data between mobile management entities according to an embodiment of the present invention.

### DESCRIPTION OF EMBODIMENTS

The following gives detailed description of a method and apparatus for secure processing of a short message provided in embodiments of the present invention with reference to the accompany drawings.

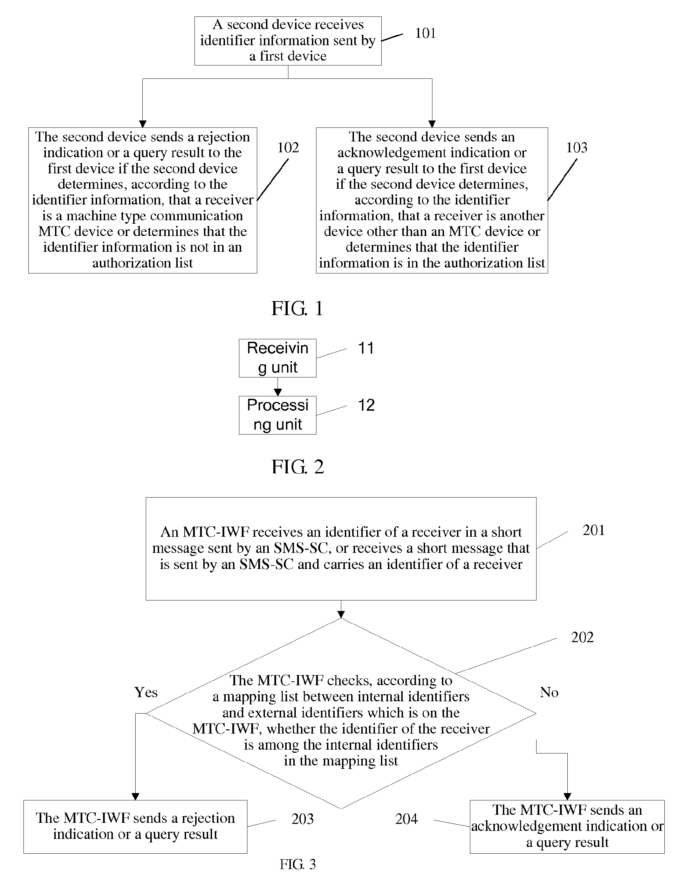

An embodiment of the present invention provides a method for secure processing of a short message. As shown in FIG. 1, the method includes the following steps:
101: A second device receives identifier information sent by a first device;
102: The second device sends a rejection indication or a query result to the first device if the second device determines, according to the identifier information, that a receiver is a machine type communication MTC device or determines that the identifier information is not in an authorization list;
103: The second device sends an acknowledgement indication or a query result to the first device if the second device determines, according to the identifier information, that a receiver is another device other than an MTC device or determines that the identifier information is in the authorization list.

According to the method for secure processing of a short message provided in this embodiment of the present invention, a second device receives identifier information sent by a first device; sends a rejection indication or a query result to the first device if the second device determines, according to the identifier information, that a receiver is a machine type communication MTC device or determines that the identifier information is not in an authorization list; or sends an acknowledgement indication or a query result to the first device if the second device determines, according to the identifier information, that a receiver is another device other than an MTC device or determines that the identifier information is in an authorization list. In this way, the identifier information is sent to the second device for checking purposes, thereby avoiding triggering of the MTC device by a terminal or by an unauthorized terminal, improving security of the MTC device, and saving power or network resources of the MTC device.

Correspondingly, an embodiment of the present invention further provides an apparatus for secure processing of a short message. As shown in FIG. 2, the apparatus includes a receiving unit 11 and a processing unit 12, where:
the receiving unit 11 is configured to receive identifier information sent by a first device; and
the processing unit 12 is configured to send a rejection indication or a query result to the first device if it is determined, according to the identifier information received by the receiving unit, that a receiver is a machine type communication MTC device or it is determined that the identifier information is not in an authorization list; or configured to send an acknowledgment indication or a query result to the first device if it is determined, according to the identifier information received by the receiving unit, that a receiver is another device other than an MTC device or it is determined that the identifier information is in an authorization list.

According to the apparatus for secure processing of a short message provided in this embodiment of the present invention, a receiving unit receives identifier information sent by a first device; and a processing unit determines, according to the identifier information, whether a receiver is a machine type communication MTC device or determines whether the identifier information is in an authorization list, so as to determine whether to send a rejection indication or send an acknowledgement indication or a query result to the first device, thereby avoiding triggering of the MTC device by a terminal, avoiding triggering of the MTC device by an unauthorized terminal, improving security of the MTC device, and saving power or network resources of the MTC device.

The MTC device is a terminal used for machine type communication or a terminal supporting a machine type communication application.

In actual application, an SMS-SC (Short Message Service-Service Center, short message service-service center) is a first device. After a short message is received, it is determined whether the short message comes from an MTCsms interface, a T4 interface, or an SMS-IWMSC (SMS Interworking Mobile Switching Center, short message service interworking mobile switching center);
when the short message comes from the T4 interface, sends the short message;
when the short message comes from the MTCsms interface, the SMS-SC checks whether an MTC server is authorized to trigger an MTC device corresponding to an identifier of the receiver; if the MTC server is authorized to trigger the MTC device corresponding to the identifier of the receiver, the SMS-SC sends the short message; and if the MTC server is not authorized to trigger the MTC device corresponding to the identifier of the receiver, the SMS-SC rejects sending the short message; and
when the short message comes from the SMS-IWMSC, the following operations are executed, as shown in FIG. 3, where the second device is an MTC-IWF (Machine Type Communication-Inter Working Function, machine type communication-interworking function), a mapping list between internal identifiers and external identifiers is stored on the MTC-IWF. Specific steps are as follows:
201: The MTC-IWF receives an identifier of the receiver in the short message sent by an SMS-SC, or receives a short message that is sent by an SMS-SC and carries an identifier of the receiver.

The identifier of the receiver may be a destination identifier or a destination address, and may be but is not limited to an IMSI, an MSISDN, or an IP address. The short message carries text information and a message header, and the message header includes the identifier of the receiver.

202: It is checked, according to the mapping list between internal identifiers and external identifiers on the MTC-IWF, whether the identifier of the receiver is among the internal identifiers in the mapping list.

The internal identifiers are identifiers used in a 3GPP network, such as an IMSI, an MSISDN, or an IP address; and the external identifiers are identifiers used outside a 3GPP network.

203: If the identifier of the receiver is among the internal identifiers in the mapping list, a terminal corresponding to the identifier of the receiver is an MTC device, and the MTC-IWF sends a rejection indication or a query result to the SMS-SC.

After the SMS-SC receives the rejection indication sent by the MTC-IWF, the SMS-SC rejects sending the short message; or, after the SMS-SC receives the query result sent by the MTC-IWF, the SMS-SC rejects, according to the query result, sending the short message.

204: If the identifier of the receiver is not among the internal identifiers in the mapping list, a terminal corresponding to the identifier of the receiver is not an MTC device, and the MTC-IWF sends an acknowledgement indication or a query result to the SMS-SC.

After the SMS-SC receives the acknowledgement indication sent by the MTC-IWF, the SMS-SC continues sending the short message; or, after the SMS-SC receives the query result sent by the MTC-IWF, the SMS-SC continues, according to the query result, sending the short message. Optionally, the MTC-IWF may further send the identifier of the receiver to an HSS (Home Subscriber Server, home subscriber server)/HLR (Home Location Register, home location register). In this case, the second device is the HSS/HLR, and the HSS/HLR stores the mapping list between internal identifiers and external identifiers. The HSS/HLR determines whether the terminal corresponding to the identifier of the receiver is an MTC device, and returns, according to a result, an indication for rejecting sending the short message or an acknowledgement indication for sending the short message, or returns a result whether the terminal corresponding to the identifier of the receiver is an MTC device.

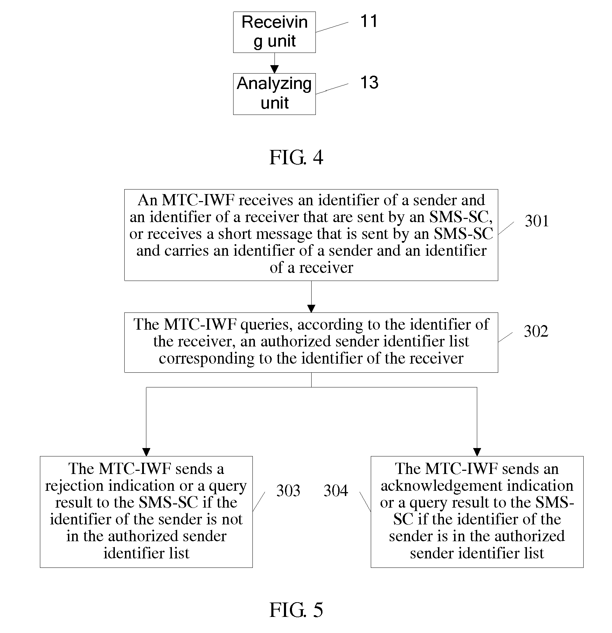

Correspondingly, the apparatus provided in this embodiment is a network side node MTC-IWF or HLR/HSS, as shown in FIG. 4, and the receiving unit 11 is specifically configured to receive an identifier of a receiver that is sent by a first device.

The apparatus may further include an analyzing unit 13, configured to determine whether a terminal corresponding to the identifier of the receiver that is received by the receiving unit is an MTC device, and specifically configured to check, according to a mapping list between internal identifiers and external identifiers on the apparatus, whether the identifier of the receiver is among the internal identifiers in the mapping list. If the identifier of the receiver is among the internal identifiers in the mapping list, a terminal corresponding to the identifier of the receiver is an MTC device.

When the short message comes from an SMS-IWMSC, the following operations may further be executed, as shown in FIG. 5, where the second device is an MTC-IWF (Machine Type Communication-Inter Working Function, machine type communication-interworking function), an authorized sender identifier list corresponding to an identifier of a receiver is stored on the MTC-IWF, and specific steps are as follows:
301: The MTC-IWF receives an identifier of a sender and an identifier of a receiver that are sent by an SMS-SC, or receives a short message that is sent by an SMS-SC and carries an identifier of a sender and an identifier of a receiver.

The identifier of the receiver may be a destination identifier or a destination address, the identifier of the sender may be a source identifier or a source address, and the identifier of the receiver and the identifier of the sender may be but are not limited to an IMSI, an MSISDN, or an IP address. The short message carries text information and a message header, and the message header includes the identifier of the receiver and the identifier of the sender.

302: The MTC-IWF queries, according to the identifier of the receiver, an authorized sender identifier list corresponding to the identifier of the receiver.

303: The MTC-IWF sends a rejection indication or a query result to the SMS-SC if the identifier of the sender is not in the authorized sender identifier list.

After the SMS-SC receives the rejection indication sent by the MTC-IWF, the SMS-SC rejects sending the short message; or, after the SMS-SC receives the query result sent by the MTC-IWF, the SMS-SC rejects, according to the query result, sending the short message.

304: The MTC-IWF sends an acknowledgement indication or a query result to the SMS-SC if the identifier of the sender is in the authorized sender identifier list.

After the SMS-SC receives the acknowledgement indication sent by the MTC-IWF, the SMS-SC continues sending the short message; or, after the SMS-SC receives the query result sent by the MTC-IWF, the SMS-SC continues, according to the query result, sending the short message.

Optionally, the MTC-IWF sends the identifier of the receiver and the identifier of the sender to an HSS/HLR, and the HSS/HLR stores the authorized sender identifier list corresponding to the identifier of the receiver. In this case, the second device is the HSS/HLR, the HSS/HLR determines whether the identifier of the sender is in the authorized sender identifier list, and returns, according to a result, an indication for rejecting sending the short message or an acknowledgement indication for sending the short message, or returns a result of determining whether a terminal corresponding to the identifier of the receiver is an MTC device.

Correspondingly, the apparatus provided in this embodiment of the present invention is a network side node MTC-IWF or HLR/HSS, and the receiving unit is specifically configured to receive an identifier of a sender and an identifier of a receiver that are sent by a first device;
the processing unit is specifically configured to: query, according to the identifier of the receiver that is received by the receiving unit, an authorized sender identifier list corresponding to the identifier of the receiver; and if the identifier of the sender is not in the authorized sender identifier list, send a rejection indication or a query result to the first device.

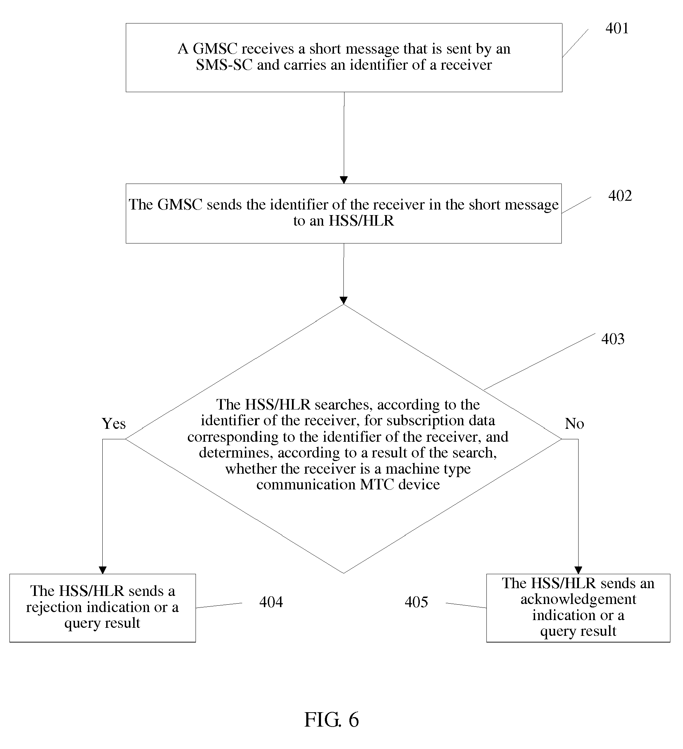

When the short message comes from an SMS-IWMSC, the SMS-SC sends the short message to a GMSC (Gateway Mobile Switching Center, gateway mobile switching center), where optionally, an indication for checking whether a terminal corresponding to the identifier of the receiver is an MTC device is carried. The GMSC forwards the identifier of the receiver to an HSS/HLR, where optionally, an indication for checking whether a terminal corresponding to the identifier of the receiver is an MTC device is carried. The GMSC is a first device, the HSS/HLR is a second device, and the HSS/HLR determines whether a terminal corresponding to the identifier of the receiver is an MTC device. As shown in FIG. 6, specific steps are as follows:
401: The GMSC receives the short message that is sent by the SMS-SC and carries the identifier of the receiver.

Optionally, an indication for checking whether a terminal corresponding to the identifier of the receiver is an MTC device is further received.

The identifier of the receiver may be a destination identifier or a destination address, and may be but is not limited to an IMSI, an MSISDN, or an IP address. The short message carries text information and a message header, and the message header includes the identifier of the receiver.

402: The GMSC sends the identifier of the receiver in the short message to the HLR/HSS.

Optionally, the GMSC further sends an indication for checking whether the terminal corresponding to the identifier of the receiver is an MTC device to the HLR/HSS.

403: The HLR/HSS searches, according to the identifier of the receiver, for subscription data corresponding to the identifier of the receiver, and determines whether the receiver is a machine type communication MTC device according to a result of the search.

404: If the receiver is an MTC device, the HLR/HSS sends a rejection indication or a query result to the GMSC.

The HSS/HLR sends the rejection indication or the query result to the GMSC, and the GMSC rejects sending the short message, or rejects, according to the query result, sending the short message. Or, the GMSC forwards the rejection indication or the query result to the SMS-SC, and the SMS-SC rejects sending the short message, or rejects, according to the query result, sending the short message.

405: If the receiver is not an MTC device, the HLR/HSS sends an acknowledgement indication or a query result to the GMSC.

The HSS/HLR sends the acknowledgement indication or the query result to the GMSC, and provides information of a serving MSC/SGSN to the GMSC, and the GMSC continues sending the short message, or continues, according to the query result, sending the short message.

The HSS/HLR provides the serving MSC (Mobile Switching Center, mobile switching center)/SGSN (Serving GPRS Support Node, serving GPRS support node) to the GMSC, and the GMSC continues sending the short message.

Correspondingly, the apparatus provided in this embodiment is a network side node HLR/HSS, and the receiving unit is specifically configured to receive a short message that is sent by a first device and carries identifier information.

The analyzing unit is specifically configured to search, according to the identifier of the receiver, for subscription data corresponding to the identifier of the receiver, and determine whether the receiver is a machine type communication MTC device according to a result of the search.

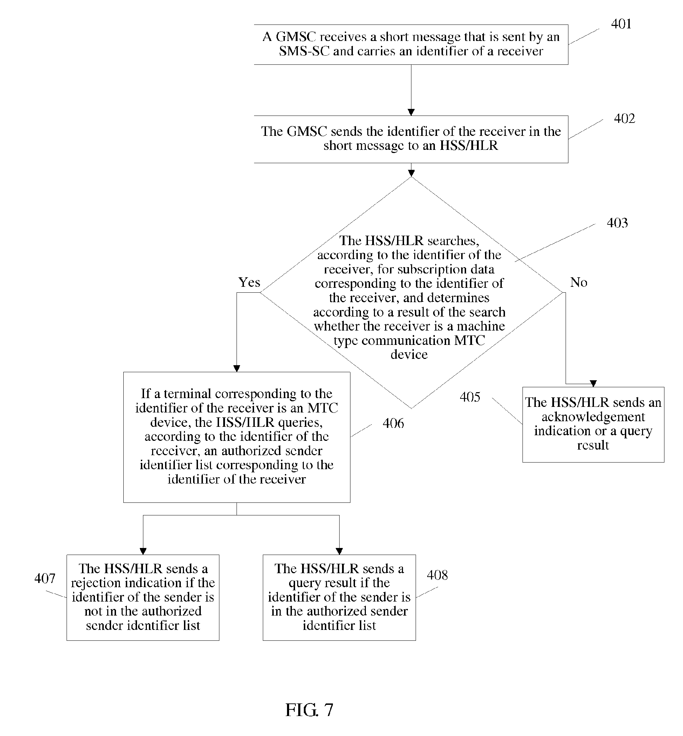

Another case also exists. It is stipulated, according to a related policy preconfigured by the network side node, that an MTC device supports receipt of a short message sent by an authorized terminal, a short message received by the GMSC further includes an identifier of a sender, and the HSS/HLR stores an authorized sender identifier list corresponding to the identifier of the receiver. When a terminal corresponding to the identifier of the receiver is an MTC device, as shown in FIG. 7, specific steps are as follows:
406: If the terminal corresponding to the identifier of the receiver is an MTC device, the HSS/HLR queries, according to the identifier of the receiver, an authorized sender identifier list corresponding to the identifier of the receiver.
407: A rejection indication or a query result is checked if the identifier of the sender is not in the authorized sender identifier list.

The HSS/HLR sends the rejection indication or the query result to the GMSC, and the GMSC rejects sending the short message, or rejects, according to the query result, sending the short message. Or, the GMSC forwards the rejection indication or the query result to the SMS-SC, and the SMS-SC rejects sending the short message, or rejects, according to the query result, sending the short message.

408: A query result is sent if the identifier of the sender is in the authorized sender identifier list.

The HSS/HLR sends the acknowledgement indication or the query result to the GMSC, and provides information of a serving MSC/SGSN to the GMSC, and the GMSC continues sending the short message, or continues, according to the query result, sending the short message.

Correspondingly, the apparatus provided in this embodiment of the present invention is a network side node HLR/HSS, and the processing unit is specifically configured to query, according to the identifier of the receiver that is received by the receiving unit, an authorized sender identifier list corresponding to the identifier of the receiver; and send a rejection indication or a query result to the first device if the identifier of the sender is not in the authorized sender identifier list.

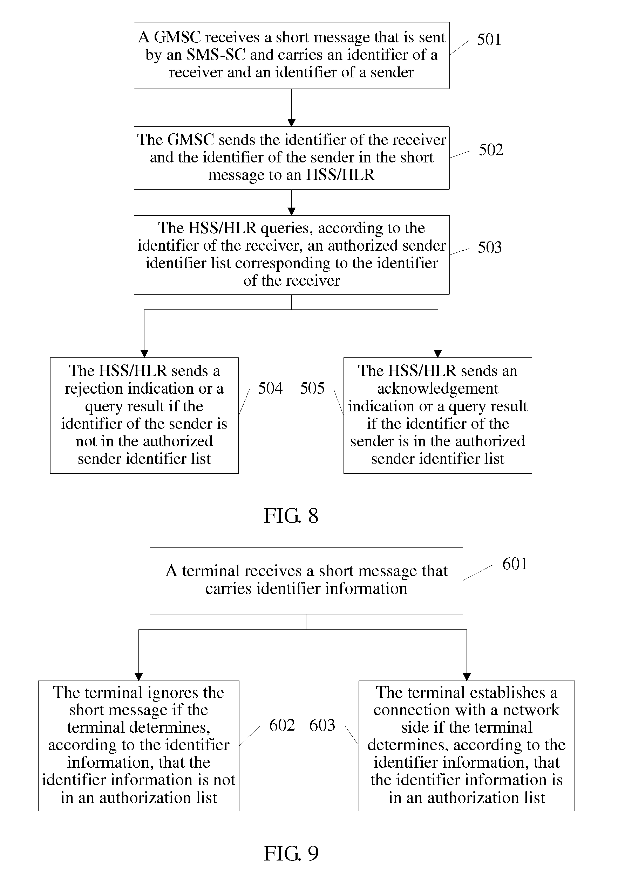

When the short message comes from an SMS-IWMSC, the SMS-SC sends the short message to a GMSC (Gateway Mobile Switching Center, gateway mobile switching center), where an indication for checking whether a terminal corresponding to the identifier of the receiver is an MTC device is carried. The GMSC forwards the identifier of the receiver and the identifier of the sender that are in the short message to an HSS/HLR. The GMSC is a first device, the HSS/HLR is a second device, and the HSS/HLR determines whether the identifier of the sender is in an authorized sender identifier list corresponding to the identifier of the receiver. As shown in FIG. 8, specific steps are as follows:
501: The GMSC receives a short message that is sent by the SMS-SC and carries the identifier of the receiver and the identifier of the sender. Optionally, an indication for checking whether the identifier of the sender is in an authorized sender identifier list corresponding to the identifier of the receiver is further received.

The identifier of the receiver may be a destination identifier or a destination address, the identifier of the sender may be a source identifier or a source address, and the identifier of the receiver and the identifier of the sender may be but are not limited to an IMSI, an MSISDN, or an IP address. The short message carries text information and a message header, and the message header includes the identifier of the receiver and the identifier of the sender.

502: The GMSC sends the identifier of the receiver and the identifier of the sender that are in the short message to an HLR/HSS.

Optionally, an indication for checking whether the identifier of the sender is in the authorized sender identifier list corresponding to the identifier of the receiver is further carried.

503: The HLR/HSSC queries, according to the identifier of the receiver, an authorized sender identifier list corresponding to the identifier of the receiver.

504: A rejection indication or a query result is sent if the identifier of the sender is not in the authorized sender identifier list.

The HSS/HLR sends the rejection indication or the query result to the GMSC, and the GMSC rejects sending the short message, or rejects, according to the query result, sending the short message. Or, the GMSC forwards the rejection indication or the query result to the SMS-SC, and the SMS-SC rejects sending the short message, or rejects, according to the query result, sending the short message.

505: An acknowledgement indication or a query result is sent if the identifier of the sender is in the authorized sender identifier list.

The HSS/HLR sends the acknowledgement indication or the query result to the GMSC, and provides information of a serving MSC/SGSN to the GMSC, and the GMSC continues sending the short message, or continues, according to the query result, sending the short message.

Correspondingly, the apparatus provided in this embodiment of the present invention is a network side node HSS/HLR, and the processing unit is specifically configured to query, according to the identifier of the receiver that is received by the receiving unit, an authorized sender identifier list corresponding to the identifier of the receiver; and send a rejection indication or a query result to the first device if the identifier of the sender is not in the authorized sender identifier list.

An embodiment of the present invention further provides another method for secure processing of a short message. As shown in FIG. 9, the method includes the following steps:
601: A terminal receives a short message that carries identifier information;
602: The terminal ignores the short message if the terminal determines, according to the identifier information, that the identifier information is not in an authorization list;
603: The terminal establishes a connection with a network side if the terminal determines, according to the identifier information, that the identifier information is in an authorization list.

According to the method for secure processing of a short message provided in this embodiment of the present invention, a terminal receives a short message that carries identifier information; and ignores the short message if the terminal determines, according to the identifier information, that the identifier information is not in an authorization list; or the terminal establishes a connection with a network side if the terminal determines that the identifier information is in an authorization list. In this way, an MTC device checks an identifier of a sender in a short message, thereby avoiding triggering of the MTC device by an unauthorized terminal, improving security of the MTC device, and saving power or network resources of the MTC device.

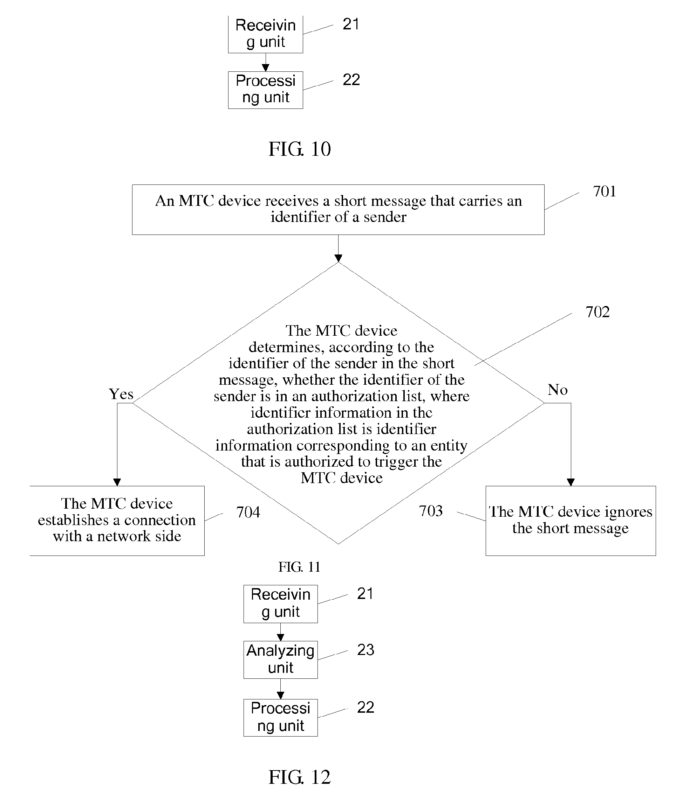

Correspondingly, an embodiment of the present invention further provides an apparatus for secure processing of a short message. As shown in FIG. 10, the apparatus includes a receiving unit 21 and a processing unit 22, where:
the receiving unit 21 is configured to receive a short message that carries identifier information; and
the processing unit 22 is configured to: ignore the short message if it is determined, according to the identifier information received by the receiving unit, that the identifier information is not in an authorization list; or configured to establish a connection between the apparatus and a network side if it is determined, according to the identifier information received by the receiving unit, that the identifier information is in an authorization list.

According to the apparatus for secure processing of a short message provided in this embodiment of the present invention, a receiving unit receives a short message that carries identifier information; and a processing unit determines, according to the identifier information, whether the identifier information is in an authorization list, so as to decide to ignore the short message, or establish a connection between the apparatus and a network side, thereby avoiding triggering of an MTC device by an unauthorized terminal, improving security of the MTC device, and saves power or network resources of the MTC device.

In actual application, the terminal is an MTC device, and the MTC device stores an authorization list corresponding to an identifier of a receiver. As shown in FIG. 11, specific steps for the MTC device to process the short message are as follows:
701: The MTC device receives the short message that carries an identifier of a sender.

The identifier of the sender may be a source identifier or a source address, and may be but is not limited to an IMSI, an MSISDN, or an IP address. The short message carries text information and a message header, and the message header includes the identifier of the sender.

702: The MTC device determines, according to the identifier of the sender in the short message, whether the identifier of the sender is in the authorization list, where identifier information in the authorization list is identifier information corresponding to an entity that is authorized to trigger the MTC device.

703: The MTC device ignores the short message if the MTC device determines that the identifier of the sender is not in the authorization list.

704: The MTC device establishes a connection with a network side if the MTC device determines that the identifier of the sender is in the authorization list.

When the identifier of the sender is in the authorization list, the MTC device accepts the short message, and establishes a PDN (Packet Data Network, packet data network) connection/PDP (Packet Data Protocol, Packet Data Protocol) context with the network side.

Correspondingly, the apparatus provided in this embodiment is an MTC device, as shown in FIG. 12, and the receiving unit 21 is specifically configured to receive a short message that carries an identifier of a sender; and

the apparatus further includes an analyzing unit 23, configured to determine, according to the identifier of the sender that is received by the receiving unit, whether the identifier of the sender is in the authorization list.

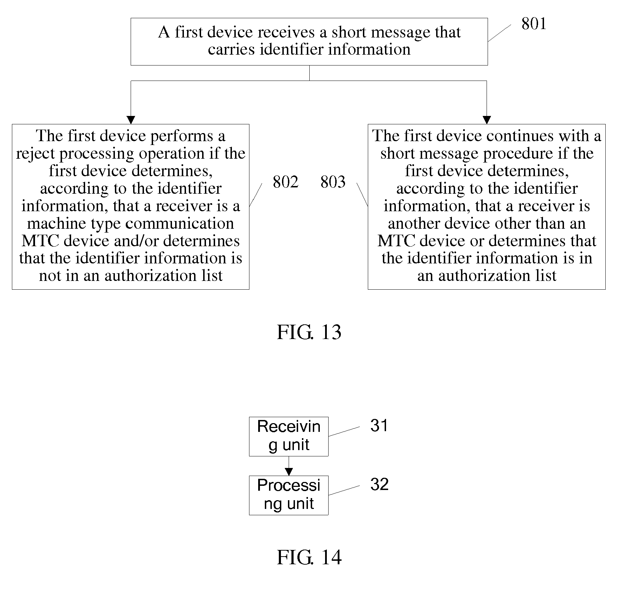

An embodiment of the present invention provides a method for secure processing of a short message. As shown in FIG. 13, the method includes the following steps:
801: A first device receives a short message that carries identifier information;
802: The first device performs a reject processing operation if the first device determines, according to the identifier information, that a receiver is a machine type communication MTC device and/or determines that the identifier information is not in an authorization list; and
803: The first device continues with a short message procedure if the first device determines, according to the identifier information, that a receiver is another device other than an MTC device or determines that the identifier information is in the authorization list.

According to the method for secure processing of a short message provided in this embodiment of the present invention, a first device receives a short message that carries identifier information; performs a reject processing operation if the first device determines, according to the identifier information, that a receiver is an MTC device and/or determines that the identifier information is not in an authorization list; or continues with a short message procedure if the first device determines that a receiver is another device other than an MTC device or determines that the identifier information is in an authorization list. In this way, when a device on a network receives a short message, by checking identifier information in the short message, triggering of an MTC device by a terminal or by an unauthorized terminal is avoided, thereby improving security of the MTC device, and saving power or network resources of the MTC device.

Correspondingly, an embodiment of the present invention further provides an apparatus for secure processing of a short message. As shown in FIG. 14, the apparatus includes a receiving unit 31 and a processing unit 32, where:
the receiving unit 31 is configured to receive a short message that carries identifier information; and
the processing unit 32 is configured to perform a reject processing operation if it is determined, according to the identifier information received by the receiving unit, that a receiver is a machine type communication MTC device and/or it is determined that the identifier information is not in an authorization list; or configured to continue with a short message procedure if it is determined, according to the identifier information received by the receiving unit, that a receiver is another device other than an MTC device or it is determined that the identifier information is in an authorization list.

According to the apparatus for secure processing of a short message provided in this embodiment of the present invention, a receiving unit receives a short message that carries identifier information; and a processing unit performs a reject processing operation if it is determined, according to the identifier information, that a receiver is an MTC device and/or determines that the identifier information is not in an authorization list; or continues with a short message procedure if it is determined that a receiver is another device other than an MTC device or determines that the identifier information is in an authorization list. In this way, when an apparatus on a network receives a short message, by checking identifier information in the short message, triggering of an MTC device by a terminal or by an unauthorized terminal is avoided, thereby improving security of the MTC device, and saving power or network resources of the MTC device.

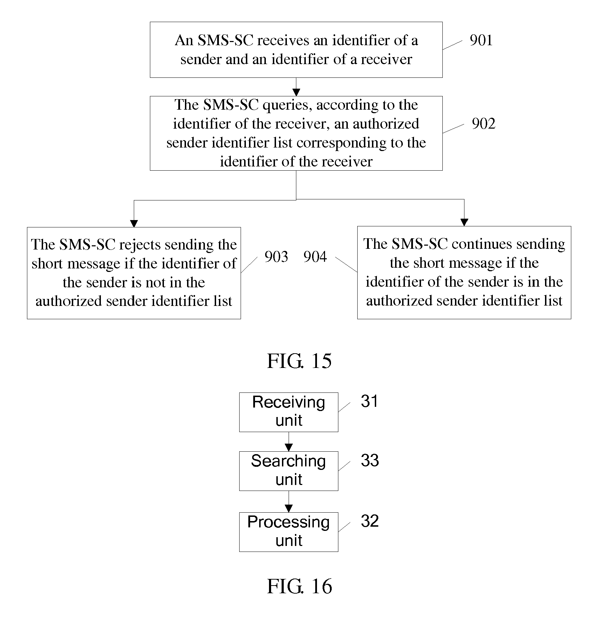

In actual application, an SMS-SC (Short Message Service-Service Center, short message service-service center) is a first device, and after a short message is received, distinguishes whether the short message comes from an MTCsms interface, a T4 interface, or an SMS-IWMSC (SMS Inter Working Mobile Switching Center, short message service interworking mobile switching center);
when the short message comes from the T4 interface, sends the short message.
when the short message comes from the MTCsms interface, the SMS-SC checks whether an MTC server is authorized to trigger an MTC device corresponding to the identifier of the receiver; if the MTC server is authorized to trigger the MTC device corresponding to the identifier of the receiver, the SMS-SC sends the short message; and if the MTC server is not authorized to trigger the MTC device corresponding to the identifier of the receiver, the SMS-SC rejects sending the short message; and
when the short message comes from the SMS-IWMSC, as shown in FIG. 15, the following operations are executed:
901: The SMS-SC receives the short message that carries an identifier of a sender and an identifier of a receiver.

An authorized sender identifier list corresponding to an MTC device is preconfigured on the SMS-SC. The identifier of the receiver may be a destination identifier or a destination address, the identifier of the sender may be a source identifier or a source address, and the identifier of the receiver and the identifier of the sender may be but are not limited to an IMSI, an MSISDN, or an IP address. The short message carries text information and a message header, and the message header includes the identifier of the receiver and the identifier of the sender.

902: The SMS-SC queries, according to the identifier of the receiver in the short message, the authorized sender identifier list corresponding to the identifier of the receiver.

903: Sending of the short message is rejected if the identifier of the sender is not in the authorized sender identifier list.

904: Sending of the short message is continued if the identifier of the sender is in the authorized sender identifier list.

Correspondingly, as shown in FIG. 16, the apparatus further includes a searching unit 33, configured to query, according to the identifier of the receiver that is received by the receiving unit, the authorized sender identifier list corresponding to the identifier of the receiver.

The processing unit 32 is specifically configured to reject sending the short message if the identifier of the sender that is received by the receiving unit is not in the authorized sender identifier list; or configured to continue sending the short message if the identifier of the sender that is received by the receiving unit is in the authorized sender identifier list.

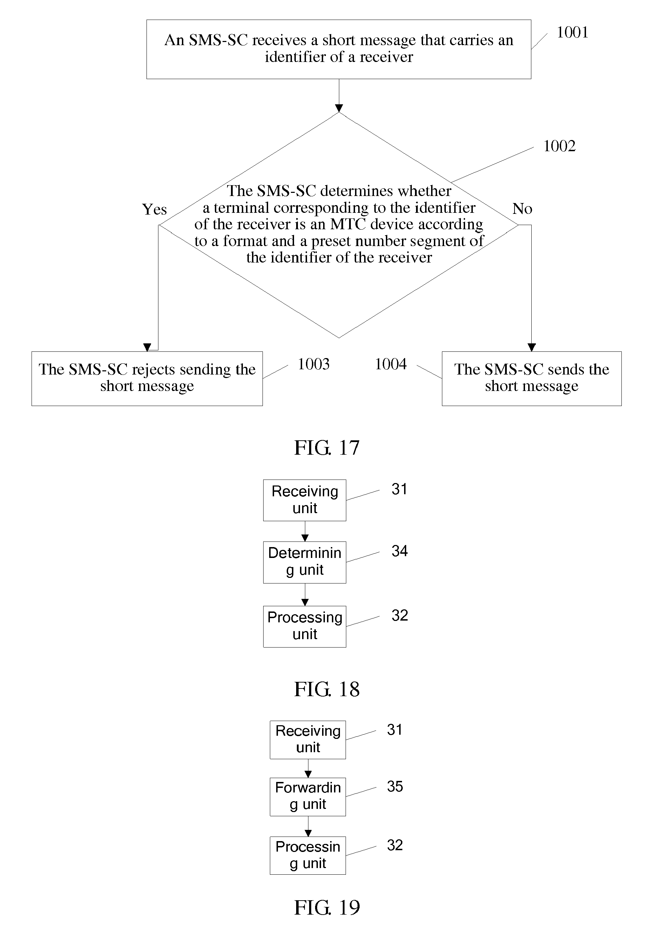

Optionally, when the short message comes from an SMS-IWMSC, as shown in FIG. 17, the following operations are executed:
1001: An SMS-SC receives the short message that carries an identifier of a receiver.

The identifier of the receiver may be a destination identifier or a destination address, and may be but is not limited to an IMSI, an MSISDN, or an IP address. The short message carries text information and a message header, and the message header includes the identifier of the receiver.

1002: It is determined, according to a format and a preset number segment of the identifier of the receiver, whether a terminal corresponding to the identifier of the receiver is an MTC device.

1003. Sending of the short message is rejected if the terminal corresponding to the identifier of the receiver is an MTC device.

1004. The short message is sent if the terminal corresponding to the identifier of the receiver is not an MTC device.

Correspondingly, the apparatus provided in this embodiment is a network side node SMS-SC, and the receiving unit is specifically configured to receive a short message that carries an identifier of a receiver.

As shown in FIG. 18, the apparatus further includes a determining unit 34, specifically configured to determine, according to a format and a preset number segment of the identifier of the receiver that is received by the receiving unit, whether a terminal corresponding to the identifier of the receiver is an MTC device; and
the processing unit 32 is specifically configured to: reject sending the short message if the terminal corresponding to the identifier of the receiver that is received by the receiving unit is an MTC device.

Another case also exists. It is stipulated, according to a related policy preconfigured by the network side node, that an MTC device supports receipt of a short message sent by an authorized terminal. If the terminal corresponding to the identifier of the receiver is an MTC device, the SMS-SC forwards the identifier of the receiver and an identifier of a sender that are in the short message to an MTC-IWF, and the MTC-IWF stores an authorized sender identifier list corresponding to the identifier of the receiver that is in the short message. For specific steps, reference may be made to steps 301 through 304 of the method shown in FIG. 5, and details are not described herein again.

Likewise, optionally, the MTC-IWF sends the identifier of the receiver and the identifier of the sender to an HSS/HLR, and the HSS/HLR stores the authorized sender identifier list corresponding to the identifier of the receiver. The HSS/HLR determines whether to reject sending the short message or return a query result.

Another case also exists. It is stipulated, according to a related policy preconfigured by the network side node, that an MTC device supports receipt of a short message sent by an authorized terminal, and the SMS-SC stores an authorized sender identifier list corresponding to the identifier of the receiver. If the terminal corresponding to the identifier of the receiver is an MTC device, for specific steps, reference may be made to the operations in steps 901 through 904 of the method shown in FIG. 15, and details are not described herein again.

Correspondingly, the apparatus provided in this embodiment is a network side node SMS-SC, as shown in FIG. 19, further including a forwarding unit 35, configured to forward identifier information to a second device, so that the second device determines, according to the identifier information, whether the identifier information is in an authorization list; if the identifier information is not in the authorization list, sends a rejection indication or a determination result to the apparatus; and if the identifier information is in the authorization list, sends an acknowledgement indication or a determination result to the apparatus.

The processing unit 32 is configured to reject sending the short message if the rejection indication sent by the second device is received; or configured to continue with the short message procedure if the acknowledgement indication sent by the second device is received; or configured to reject sending the short message or continue with the short message procedure according to the query result if the determination result sent by the second device is received.

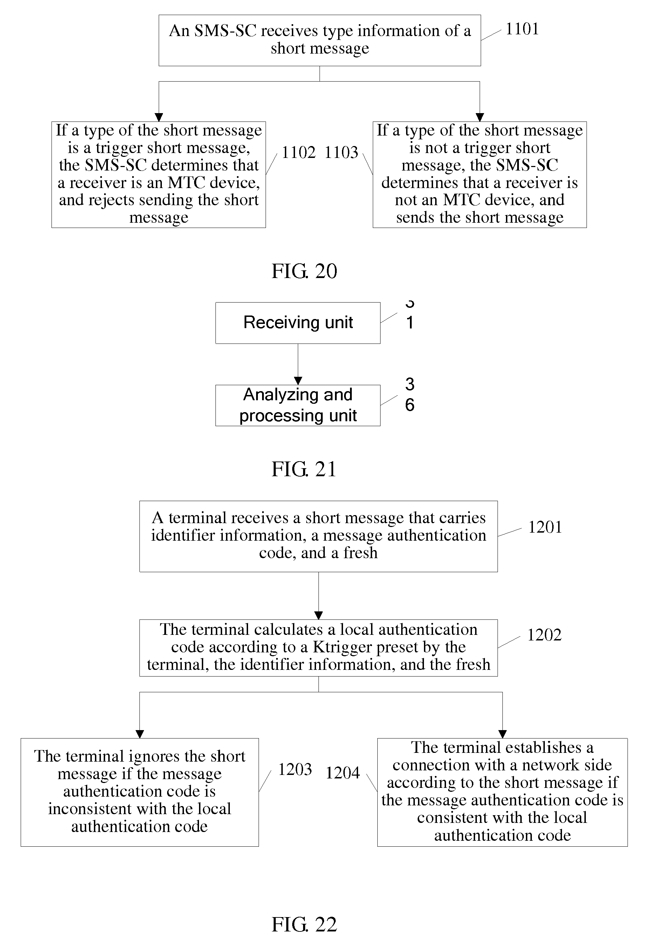

Optionally, when the short message comes from an SMS-IWMSC, as shown in FIG. 20, the following operations are executed:
1101: An SMS-SC receives type information of a short message.
1102: If a type of the short message is a trigger short message, the SMS-SC determines that a receiver is an MTC device, and rejects sending the short message.
1103: If a type of the short message is not a trigger short message, the SMS-SC determines that the receiver is not an MTC device, and sends the short message.

Correspondingly, the apparatus provided in this embodiment is a network side node SMS-SC, as shown in FIG. 21, and the receiving unit 31 is specifically configured to receive type information of a short message; and
the apparatus further includes an analyzing and processing unit 36, configured to reject sending the short message if it is determined, according to the type information of the short message that is received by the receiving unit, that the receiver is an MTC device.

Specifically, the analyzing and processing unit 36 is configured to: if a type of the short message received by the receiving unit is a trigger short message, determine that the receiver is an MTC device.

Another case also exists. It is stipulated, according to a related policy preconfigured by the network side node, that an MTC device supports receipt of a short message sent by an authorized terminal, and the SMS-SC stores an authorized sender identifier list corresponding to the identifier of the receiver. If a terminal corresponding to the identifier of the receiver is an MTC device, for specific steps, reference may be made to the operations in steps 901 through 904 of the method shown in FIG. 15, and details are not described herein again.

Still another case also exists. It is stipulated, according to a related policy preconfigured by the network side node, that an MTC device supports receipt of a short message sent by an authorized terminal, and an HSS/HLR stores an authorized sender identifier list corresponding to the identifier of the receiver. If a terminal corresponding to the identifier of the receiver is an MTC device, for specific steps, reference may be made to the operations in steps 501 through 505 of the method shown in FIG. 8, and details are not described herein again.

Yet another case also exists. It is stipulated, according to a related policy preconfigured by the network side node, that an MTC device supports receipt of a short message sent by an authorized terminal, and an MTC-IWF stores an authorized sender identifier list corresponding to the identifier of the receiver. If a terminal corresponding to the identifier of the receiver is an MTC device, for specific steps, reference may be made to the operations in steps 301 through 304 of the method shown in FIG. 5, and details are not described herein again.

Likewise, optionally, the MTC-IWF sends the identifier of the receiver and the identifier of the sender to an HSS/HLR, and the HSS/HLR stores the authorized sender identifier list corresponding to the identifier of the receiver. It is determined by the HSS/HLR whether to reject sending the short message or send a query result.

### Embodiment 4

An embodiment of the present invention further provides a method for secure processing of a short message, as shown in FIG. 22, where a terminal is an MTC device. Specific steps are as follows:
1201: A terminal receives a short message that carries identifier information, a message authentication code, and a fresh.

The short message includes an identifier (Identifier) of a receiver, a message authentication code MAC, and a fresh (Fresh).

1202: The terminal calculates a local authentication code according to a Ktrigger preconfigured by the terminal, the identifier information, and the fresh.

The local authentication code MAC' is calculated according to the preconfigured Ktrigger, the identifier of the receiver in the received short message, and the fresh.

The local authentication code is calculated by using a hash function, and is obtained by calculation according to a formula MAC' = Hash (Ktrigger, Identifier, Fresh).

1203: The short message is ignored if the message authentication code is inconsistent with the local authentication code.

1204: A connection with a network side is established according to the short message if the message authentication code is consistent with the local authentication code.

When the message authentication code is consistent with the local authentication code, the MTC device receives the short message and establishes a PDN connection/PDP context.

According to the method for secure processing of a short message provided in this embodiment of the present invention, an MTC device receives identifier information, a message authentication code, and a fresh in a short message, and calculates a local authentication code by using a Ktrigger preconfigured by the MTC device, the identifier information, and the fresh; compares the local authentication code with the message authentication code; if the local authentication code is inconsistent with the message authentication code, ignores the short message; and if the local authentication code is consistent with the message authentication code, accepts the short message. In this way, the MTC device checks a message authentication code in a short message, thereby avoiding triggering of the MTC device by an unauthorized terminal, improving security of the MTC device, and saves power or network resources of the MTC device.

The fresh may be implemented in the following three manners:

A first manner is using a random number. A terminal stores some recently received random numbers, the quantity of which is to be determined and may be determined according to frequency of sending a short message. For example, a secure trigger short message is sent once a day, and the terminal stores 32 random numbers, which means that an attacker needs to resend a short message that is 32 days ago to achieve successful triggering. In this way, security of an MTC device is ensured.

A second manner is using a timestamp, in which time synchronization between a terminal and a network side needs to be ensured.

A third manner is using a sequence number or using a requested number in a short message. A length of a sequence number is to be determined and needs to be determined according to frequency of sending a short message. In a case in which the sequence number is out of synchronization, two processing methods may be employed: One is that a receiving end rejects executing the short message until the sequence number is synchronous; and the other is that a receiving end returns a current sequence number of the receiving end to the terminal, and the terminal uses the sequence number of the receiving number as a sequence number of the terminal.

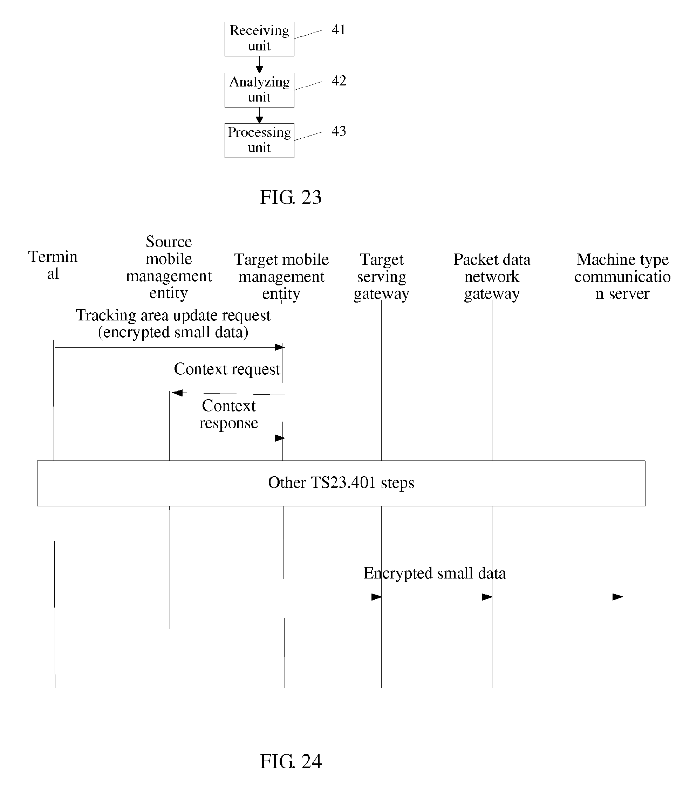

Correspondingly, an apparatus provided in this embodiment of the present invention is an MTC device. As shown in FIG. 23, the apparatus includes a receiving unit 41, an analyzing unit 42, and a processing unit 43, where:
the receiving unit 41 is configured to receive a short message that carries identifier information, a message authentication code, and a fresh;
the analyzing unit 42 is configured to calculate a local authentication code according to a Ktrigger preconfigured on the analyzing unit, the identifier information received by the receiving unit, and the fresh received by the receiving unit; and
the processing unit 43 is configured to ignore the short message if the message authentication code received by the receiving unit is inconsistent with the local authentication code calculated by the analyzing unit; or configured to establish a connection between the apparatus and a network side if the message authentication code received by the receiving unit is consistent with the local authentication code calculated by the analyzing unit.

According to the apparatus for secure processing of a short message provided in this embodiment of the present invention, a receiving unit receives a short message that carries identifier information, a message authentication code, and a fresh; an analyzing unit calculates a local authentication code according to a Ktrigger preconfigured on the analyzing unit, the identifier information, and the fresh; and a processing unit ignores the short message if the message authentication code is inconsistent with the local authentication code, or establishes a connection between the apparatus and a network side if the message authentication code is consistent with the local authentication code, thereby avoiding triggering of an MTC device by an unauthorized terminal, improving security of the MTC device, and saving power or network resources of the MTC device.

The identifier mentioned in the foregoing embodiment may be an MSISDN or an IMSI.

One solution for machine type communication would be to use a TAU (Tracking Area Update, tracking area update) request or an attach request to carry encrypted small data. If a TAU procedure occurs between different MMEs (Mobile Management Entity, mobile management entity), that is, an MTC device initiates the TAU procedure to a target MME, the target MME may be unable to decrypt the small data, because the target MME does not have a security context of the terminal or the target MME does not support a current algorithm.

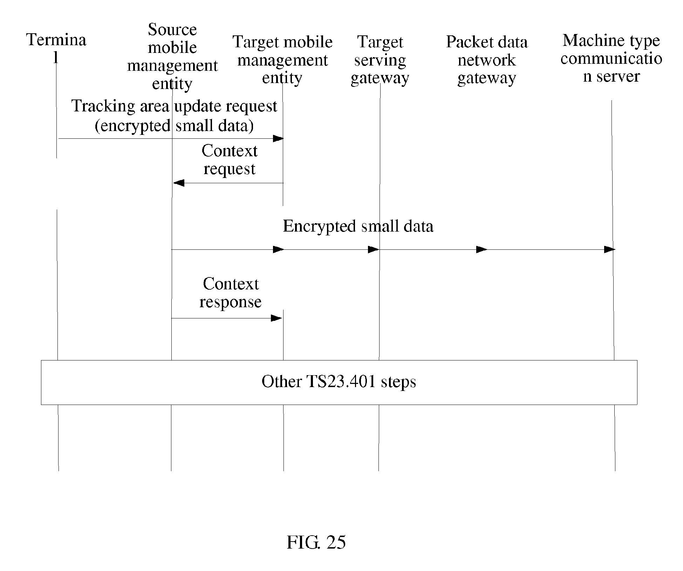

To solve the foregoing problem, the following methods may be adopted:
Method 1: A shown in FIG. 24, the target MME encapsulates the entire TAU request in a context request message and forwards the entire TAU request to a source MME; the source MME decrypts the small data, encapsulates decrypted small data in a context response, and sends a context response to the target MME; and then the target MME sends the small data to an MTC server; or
Method 2: As shown in FIG. 25, the target MME encapsulates the entire TAU request in a context request message and forwards a message to a source MME; and the source MME decrypts the small data and directly sends small data to an MTC server.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for secure processing of a short message, comprising:
receiving, by a second device, identifier information sent by a first device;
sending a rejection indication or a query result to the first device if the second device determines, according to the identifier information, that a receiver is a machine type communication MTC device or determines that the identifier information is not in an authorization list; or
sending an acknowledgement indication or a query result to the first device if the second device determines, according to the identifier information, that a receiver is another device other than an MTC device or determines that the identifier information is in an authorization list.

2. The method according to claim 1, wherein the receiving, by a second device, identifier information sent by a first device comprises:
receiving, by the second device, a short message that carries the identifier information and is sent by the first device.

3. The method according to claim 1 or 2, wherein:
the receiving, by a second device, identifier information sent by a first device comprises:
receiving, by the second device, an identifier of the receiver that is sent by the first device; and
before the second device determines, according to the identifier information, that a receiver is a machine type communication MTC device, the method further comprises:
determining, by the second device, whether a terminal corresponding to the identifier of the receiver is an MTC device.

4. The method according to claim 3, wherein the determining, by the second device, whether a terminal corresponding to the identifier of the receiver is an MTC device comprises:
checking, according to a mapping list between internal identifiers and external identifiers which is on the second device, whether the identifier of the receiver is among the internal identifiers in the mapping list, and if the identifier of the receiver is among the internal identifiers in the mapping list, the receiver corresponding to the identifier of the receiver is an MTC device; or
searching, by the second device, for subscription data corresponding to the identifier of the receiver according to the identifier of the receiver, and determining whether the receiver is a machine type communication MTC device according to a result of the search.

5. The method according to claim 1 or 2, wherein:
the receiving, by a second device, identifier information sent by a first device comprises:
receiving, by the second device, an identifier of a sender and an identifier of the receiver that are sent by the first device; and
the sending a rejection indication or a query result to the first device if the second device determines, according to the identifier information, that the identifier information is not in an authorization list comprises:
querying, by the second device, an authorized sender identifier list corresponding to the identifier of the receiver according to the identifier of the receiver; and
sending the rejection indication or the query result to the first device if the identifier of the sender is not in the authorized sender identifier list.

6. A method for secure processing of a short message, comprising:
receiving, by a terminal, a short message that carries identifier information;
ignoring the short message if the terminal determines, according to the identifier information, that the identifier information is not in an authorization list; or
establishing, by the terminal, a connection with a network side if the terminal determines, according to the identifier information, that the identifier information is in an authorization list.

7. The method according to claim 6, wherein the receiving, by a terminal, a short message that carries identifier information comprises:
receiving, by the terminal, the short message that carries an identifier of a sender; and
before the terminal determines, according to the identifier information, that the identifier information is in an authorization list, the method further comprises:
determining, by the terminal, whether the identifier of the sender is in the authorization list according to the identifier of the sender.

8. A method for secure processing of a short message, comprising:
receiving, by a first device, a short message that carries identifier information;
performing a reject processing operation if the first device determines, according to the identifier information, that a receiver is a machine type communication MTC device and/or determines that the identifier information is not in an authorization list; or
continuing with a short message procedure if the first device determines, according to the identifier information, that a receiver is another device other than an MTC device or determines that the identifier information is in an authorization list.

9. The method according to claim 8, wherein the first device further receives type information of the short message, and the method further comprises:
rejecting sending the short message if the first device determines, merely according to the type information of the short message, that the receiver is an MTC device.

10. The method according to claim 9, wherein that the first device determines, merely according to the type information of the short message, that the receiver is an MTC device comprises:
determining, by the first device, that the receiver is an MTC device if a type of the short message is a trigger short message.

11. The method according to claim 10, wherein when the identifier information is an identifier of the receiver and an identifier of a sender, the method further comprises:
querying, by the first device, an authorized sender identifier list corresponding to the identifier of the receiver according to the identifier of the receiver; and
the performing a reject processing operation if the first device determines, according to the identifier information, that the identifier information is not in an authorization list comprises:
rejecting sending the short message if the identifier of the sender is not in the authorized sender identifier list.

12. The method according to claim 8, wherein the receiving, by a first device, a short message that carries identifier information comprises:
receiving, by the first device, the short message that carries an identifier of a sender and an identifier of the receiver; and
the performing a reject processing operation if the first device determines, according to the identifier information, that a receiver is an MTC device and determines that the identifier information is not in an authorization list comprises:
determining, by the first device, that the receiver is an MTC device according to the identifier of the receiver; and further querying, by the first device, an authorized sender identifier list corresponding to the identifier of the receiver according to the identifier of the receiver; and
rejecting sending the short message if the identifier of the sender is not in the authorized sender identifier list.

13. The method according to claim 8, wherein the receiving, by a first device, a short message that carries identifier information comprises:
receiving, by the first device, the short message that carries an identifier of the receiver; and
the performing a reject processing operation if the first device determines, according to the identifier information, that a receiver is an MTC device comprises:
performing the reject processing operation if the first device determines, according to the identifier of the receiver, that the receiver is an MTC device.

14. The method according to claim 8, 12, or 13, wherein the receiving, by a first device, a short message that carries identifier information comprises:
receiving, by the first device, the short message that carries the identifier of the receiver; and
before the first device determines, according to the identifier information, that a receiver is an MTC device, the method further comprises:
determining, by the first device, whether a terminal corresponding to the identifier of the receiver is an MTC device.

15. The method according to claim 14, wherein the determining, by the first device, whether a terminal corresponding to the identifier of the receiver is an MTC device comprises:
Determining, according to a format and a preset number segment of the identifier of the receiver, whether the terminal corresponding to the identifier of the receiver is an MTC device.

16. The method according to claim 8, wherein the receiving, by a first device, a short message that carries identifier information comprises:
receiving, by the first device, the short message that carries an identifier of the receiver and an identifier of a sender; and
the performing a reject processing operation if the first device determines, according to the identifier information, that the identifier information is not in an authorization list comprises:
querying, by the first device, an authorized sender identifier list corresponding to the identifier of the receiver according to the identifier of the receiver; and
rejecting sending the short message if the identifier of the sender is not in the authorized sender identifier list.

17. The method according any one of claims 8 to 16, wherein if the first device determines, according to the identifier information, that the receiver is an MTC device, the method further comprises:
forwarding, by the first device, the identifier information or the short message that carries the identifier information to a second device, so that the second device determines, according to the identifier information or the short message that carries the identifier information, whether the identifier information is in the authorization list; if the identifier information is not in the authorization list, sends a rejection indication or a determining result to the first device; and if the identifier information is in the authorization list, sends an acknowledgement indication or a determining result to the first device;
rejecting sending the short message if the first device receives the rejection indication sent by the second device;
continuing with the short message procedure if the first device receives the acknowledgement indication sent by the second device; and
rejecting sending the short message or continuing with the short message procedure according to the determining result if the first device receives the determining result sent by the second device.

18. A method for secure processing of a short message service (SMS) service, comprising:
receiving, by a terminal, a short message that carries identifier information, a message authentication code, and a fresh;
calculating, by the terminal, a local authentication code according to a Ktrigger preconfigured by the terminal, the identifier information, and the fresh;
ignoring the short message if the message authentication code is inconsistent with the local authentication code; or
establishing, by the terminal, a connection with a network side if the message authentication code is consistent with the local authentication code.

19. The method according to claim 17, wherein the fresh comprises a random number, a timestamp, or a sequence number.

20. An apparatus for secure processing of a short message service (SMS) service, comprising:
a receiving unit, configured to receive identifier information sent by a first device; and
a processing unit, configured to send a rejection indication or a query result to the first device if it is determined, according to the identifier information received by the receiving unit, that a receiver is a machine type communication MTC device or it is determined that the identifier information is not in an authorization list; or configured to send an acknowledgment indication or a query result to the first device if it is determined, according to the identifier information received by the receiving unit, that a receiver is another device other than an MTC device or it is determined that the identifier information is in an authorization list.

21. The apparatus according to claim 20, wherein the receiving unit is specifically configured to receive a short message that carries the identifier information and is sent by the first device.

22. The apparatus according to claim 20 or 21, wherein:
the receiving unit is specifically configured to receive an identifier of the receiver that is sent by the first device; and
the apparatus further comprises an analyzing unit, configured to determine whether a terminal corresponding to the identifier of the receiver that is received by the receiving unit is an MTC device.

23. The apparatus according to claim 22, wherein the analyzing unit is specifically configured to:
check, according to a mapping list between internal identifiers and external identifiers which is on the apparatus, whether the identifier of the receiver that is received by the receiving unit is among the internal identifiers in the mapping list, and if the identifier of the receiver is among the internal identifiers in the mapping list, the receiver corresponding to the identifier of the receiver is an MTC device; or search, according to the identifier of the receiver, for subscription data corresponding to the identifier of the receiver, and determine whether the receiver is a machine type communication MTC device according to a result of the search.

24. The apparatus according to claim 20 or 21, wherein:
the receiving unit is specifically configured to receive an identifier of a sender and an identifier of the receiver that are sent by the first device; and
the processing unit is specifically configured to query, according to the identifier of the receiver that is received by the receiving unit, an authorized sender identifier list corresponding to the identifier of the receiver, and send the rejection indication or the query result to the first device if the identifier of the sender that is received by the receiving unit is not in the authorized sender identifier list.

25. An apparatus for secure processing of a short message, comprising:
a receiving unit, configured to receive a short message that carries identifier information; and
a processing unit, configured to ignore the short message if it is determined, according to the identifier information received by the receiving unit, that the identifier information is not in an authorization list; or configured to establish a connection between the apparatus and a network side if it is determined, according to the identifier information received by the receiving unit, that the identifier information is in an authorization list.

26. The apparatus according to claim 25, wherein:
the receiving unit is specifically configured to receive the short message that carries an identifier of a sender; and
the apparatus further comprises an analyzing unit, configured to determine, according to the identifier of the sender that is received by the receiving unit, whether the identifier of the sender is in the authorization list.

27. An apparatus for secure processing of a short message, comprising:
a receiving unit, configured to receive a short message that carries identifier information; and
a processing unit, configured to perform a reject processing operation if it is determined, according to the identifier information received by the receiving unit, that a receiver is a machine type communication MTC device and/or it is determined that the identifier information is not in an authorization list; or configured to continue with a short message procedure if it is determined, according to the identifier information received by the receiving unit, that a receiver is another device other than an MTC device or it is determined that the identifier information is in an authorization list.

28. The apparatus according to claim 27, wherein:
the receiving unit is specifically configured to receive type information of the short message; and
the apparatus further comprises an analyzing and processing unit, configured to reject sending the short message if it is determined, according to the type information of the short message that is received by the receiving unit, that the receiver is an MTC device.

29. The apparatus according to claim 28, wherein the analyzing and processing unit is specifically configured to:
reject sending the short message, if a type of the short message received by the receiving unit is a trigger short message and it is determined that the receiver is an MTC device.

30. The apparatus according to claim 29, wherein when the identifier information received by the receiving unit is an identifier of the receiver and an identifier of a sender, the apparatus further comprises:
a searching unit, configured to query, according to the identifier of the receiver that is received by the receiving unit, an authorized sender identifier list corresponding to the identifier of the receiver; and
the processing unit is specifically configured to reject sending the short message if the identifier of the sender that is received by the receiving unit is not in the authorized sender identifier list.

31. The apparatus according to claim 27, wherein:
the receiving unit is specifically configured to receive the short message that carries an identifier of a sender and an identifier of the receiver; and
the processing unit is specifically configured to determine, according to the identifier of the receiver that is received by the receiving unit, that the receiver is an MTC device;query, according to the identifier of the receiver that is received by the receiving unit, an authorized sender identifier list corresponding to the identifier of the receiver; andreject sending the short message if the identifier of the sender that is received by the receiving unit is not in the authorized sender identifier list.

32. The apparatus according to claim 27, wherein:
the receiving unit is specifically configured to receive the short message that carries an identifier of the receiver; and
the processing unit is specifically configured to perform the reject processing operation if it is determined, according to the identifier of the receiver that is received by the receiving unit, that the receiver is an MTC device.

33. The apparatus according to claim 27, 31, or 32, wherein:
the receiving unit is specifically configured to receive the short message that carries the identifier of the receiver; and
the apparatus further comprises a determining unit, configured to determine whether a terminal corresponding to the identifier of the receiver that is received by the receiving unit is an MTC device.

34. The apparatus according to claim 33, wherein:
the determining unit is specifically configured to determine, according to a format and a preset number segment of the identifier of the receiver that is received by the receiving unit, whether the terminal corresponding to the identifier of the receiver is an MTC device.

35. The apparatus according to claim 27, wherein:
the receiving unit is specifically configured to receive the short message that carries an identifier of the receiver and an identifier of a sender; and
the processing unit is specifically configured to query, according to the identifier of the receiver that is received by the receiving unit, an authorized sender identifier list corresponding to the identifier of the receiver; and reject sending the short message if the identifier of the sender is not in the authorized sender identifier list.

36. The apparatus according to any one of claims 27 to 35, wherein if the processing unit determines, according to the identifier information, that the receiver is an MTC device, the apparatus further comprises:
a forwarding unit, configured to forward the identifier information or the short message that carries the identifier information to a second device, so that the second device determines, according to the identifier information or the short message that carries the identifier information, whether the identifier information is in the authorization list; if the identifier information is not in the authorization list, sends a rejection indication or a determination result to the apparatus; and if the identifier information is in the authorization list, sends an acknowledgement indication or a determination result to the apparatus; and
the processing unit is configured to reject sending the short message if the rejection indication sent by the second device is received; or configured to continue with the short message procedure if the acknowledgement indication sent by the second device is received; or configured to reject sending the short message or continue with the short message procedure according to the determination result if the determination result sent by the second device is received.

37. An apparatus for secure processing of a short message, comprising:
a receiving unit, configured to receive a short message that carries identifier information, a message authentication code, and a fresh;
an analyzing unit, configured to calculate a local authentication code according to a Ktrigger preconfigured on the analyzing unit, the identifier information received by the receiving unit, and the fresh received by the receiving unit; and
a processing unit, configured to ignore the short message if the message authentication code received by the receiving unit is inconsistent with the local authentication code calculated by the analyzing unit; or configured to establish a connection between the apparatus and a network side if the message authentication code received by the receiving unit is consistent with the local authentication code calculated by the analyzing unit.

38. The apparatus according to claim 37, wherein the fresh received by the receiving unit comprises a random number, a timestamp, or a sequence number.
